# EUROPÄISCHE PATENTSCHRIFT

(11) **EP 1 062 778 B1**
(45) Veröffentlichungstag und Bekanntmachung des Hinweises auf die Patenterteilung: **11.08.2004**
(21) Anmeldenummer: 99939241.8
(22) Anmeldetag: 23.02.1999
(51) Int. Cl.: H04L 12/44

(54) **DATENBUS FÜR MEHRERE TEILNEHMER**
DATA BUS FOR A PLURALITY OF NODES
BUS DE DONNEES POUR PLUSIEURS NOEUDS

(30) Priorität: 10.03.1998 DE 19810291
(43) Veröffentlichungstag der Anmeldung: 27.12.2000
(73) Patentinhaber: Bayerische Motoren Werke Aktiengesellschaft, 80809 München (DE)
(72) Erfinder: PELLER, Martin, D-82256 Fürstenfeldbruck (DE); BERWANGER, Josef, D-85586 Poing (DE); GRIESSBACH, Robert, D-83629 Weyarn (DE); SMUK, Karel, D-85301 Schweitenkirchen (DE)
(74) Vertreter: Wesel-Mair, Julia
(86) Internationale Anmeldenummer: PCT/EP1999/001165
(87) Internationale Veröffentlichungsnummer: WO 1999/046894

(56) Entgegenhaltungen:
- EP-A- 0 698 980
- WO-A-90/09710

## Beschreibung

Die Erfindung bezieht sich auf einen Datenbus für mehrere Teilnehmer, die über einen Sternkoppler miteinander verbunden sind. Ein derartiger Datenbus ist aus der nicht vorveröffentlichten deutschen Patentanmeldung, veröffentlicht unter DE 19720401 A, bekannt. Dabei sind die Teilnehmer über Sende-/Empfangsmodule am Datenbus solange angeschlossen wie sie fehlerfrei arbeiten. Die Busteilnehmer sind auch aktiv, wenn sie gar nicht benötigt werden. Abhängig von der Art der Anwendung aber kann die Deaktivierung des gesamten Datenbusses nicht immer erwünscht sein. Bei einem Fahrzeug sollen nach dem Abstehen Teilnehmer, die der Zugangskontrolle und dem Diebstahtschutz dienen, weiterhin aktiv sein, während alle übrigen Teilnehmer nicht benötigt werden.

Der Erfindung liegt die Aufgabe zugrunde, einen Datenbus der eingangs genannten Art zu schaffen, der die Möglichkeit bietet. Teilnehmer selektiv abzuschalten.

Die Erfindung löst diese Aufgabe mit den Mitteln des Patentanpruchs 1.

Diese Lösung besteht aus einer Reihe von Einzelmaßnahmen, die in Kombination die gewünschte Wirkung zeigen. Zum einen werden ggf. auftretende optische Signale in elektrische Form umgewandelt und als Eingangssignale dem Stemkoppler in elektrischer Form zugeführt. Der Stemkoppler selbst enthält ein logisches Entscheidungsglied, auf das die Eingangssignale geführt sind und dessen Ausgang über eine elektrische Leitung parallel an den Eingängen der Teilnehmer angeschlossen ist.

In diesem Zusammenhang ist aus der WO 90/ 09710 ein Datenbus bekannt, bei dem jeder Teilnehmer am Sternkoppler über eine elektrische und eine optische Leitung angeschlossen ist.. Innerhalb des Stemkopplers sind die Teilnehmer verORed. Hierfür ist kein physikalisch vorhandenes Entscheidungsglied vorgesehen. Dieses ist auch bei einem derartigen Datenbus gar nicht erforderlich, da eine sog. Wired-Or-Verknüpfung, wie sie hier vorliegt, schaltungstechnisch realisiert wird.

Zumindest an den Eingängen der Teilnehmer, die bedarfsweise abgeschaltet werden sollen, ist erfindungsgemäß ferner ein Schalter parallel geschaltet zugeordnet, der ggf. aktivierbar ist und der die Übertragungstrecke zwischen dem Entscheidungsglied und dem Teilnehmer unterbricht und damit den Teilnehmer vom Datenbus abtrennt.

Eine vorteilhafte Ausgestaltung der Erfindung ist im Patentanspruch 2 angegeben. Durch die Adressierbarkeit des Schalters ist es auf einfache Weise möglich, im Bedarfsfall nur einen einzigen Teilnehmer vom Datenbus abzutrennen.

Schließlich kann ein derartiger Schalter auch einer Gruppe von Teilnehmern zugeordnet sein, die stets gemeinsam ab- oder angeschaltet werden sollen.

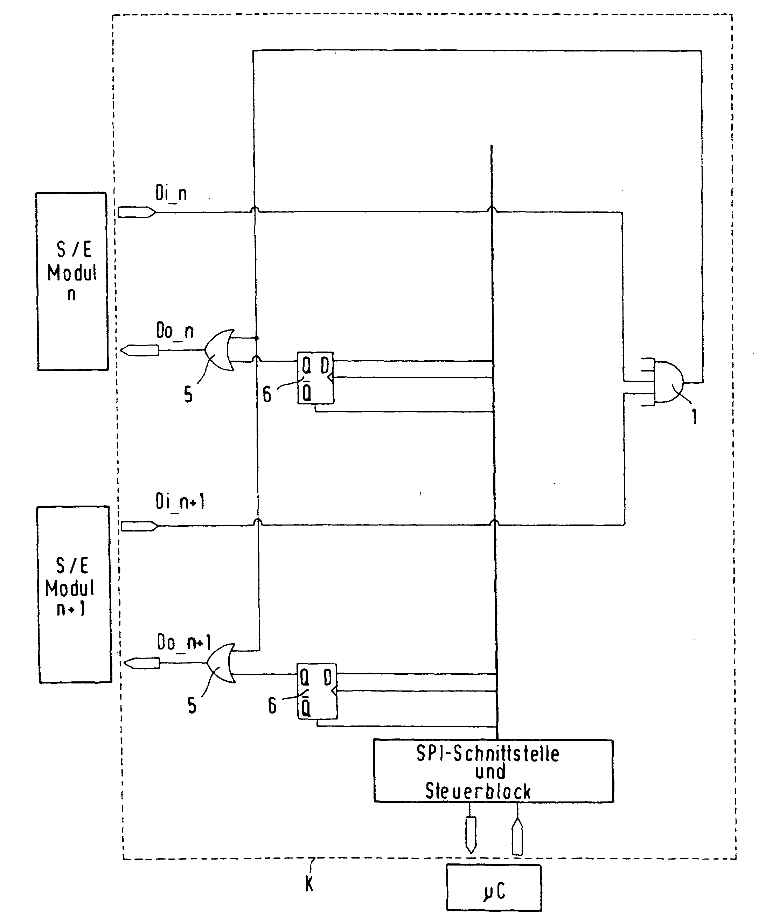

Anhand der einzigen Figur ist die Erfindung weiter erläutert. Darin ist ausschnittsweise ein erfindungsgemäßer Datenbus dargestellt, bei dem der Sendebetrieb der Teilnehmer überwacht wird.

An einem Datenbus D sind hierdargestellt zwei Teilnehmer Tₙ und Tₙ₊₁ über S/E (Sende/Empfangs-) Module S/Eₙ und S/Eₙ₊₁ angeschlossen. Die Module S/Eₙ und S/Eₙ₊₁ wandeln von den Teilnehmern Tₙ und Tₙ₊₁ kommende optische Telegramme in elektrische Form um und geben diese Signale Diₙ, Diₙ₊₁ als Eingangssignale. auf ein logisches Entscheidungsglied (UND-Gatter 1) als zentraler Bestandteil eines Sternkopplers K weiter. Die Zahl der Ein gänge des UND-Gatters 1 entspricht der Anzahl der Busteilnehmer. Der Ausgang des UND-Gatters treibt alle Eingänge (Doₙ, Doₙ₊₁) der Module S/Eₙ und S/Eₙ₊₁. Diese wandeln diese elektrischen Signale in optische Signale um und übertragen diese optischen Signale über nicht dargestellte optische Übertragungstrecken zu den Teilnehmern Tₙ und Tₙ₊₁.

Ein Teilnehmer kann vom Empfangen der Buskommunikation abgetrennt werden. Zu diesem Zweck ist in jedem Ausgangspfad des UND-Gatters 1 ein ODER-Gatter 5 vorgesehen, dessen zweiter Eingang über einen Ausgang eines Steuerregisters 6 auf High-Pegel gesetzt werden kann. Das Steuerregister 6 ist adressierbar und wird über eine serielle Schnittstelle (z.B. SPI) von einem Microcontroller uC aus gesteuert.

Dadurch kann sich ein Low-Pegel am Ausgang des UND-Gatters 1 zu dem Eingang des zugeordneten Moduls S/Eₙ oder S/Eₙ₊₁ nicht mehr durchsetzen. Der angeschlossene Teilnehmer kann keine Telegramme empfangen und kann z.B. im Sleep Mode verharren. Mit dieser Funktion können Teilnehmer entweder einzeln oder in Gruppen von der Buskommunikation getrennt werden.

Soll der Teilnehmer wieder aktiviert werden, kann das Steuerregister 6 deaktiviert und das ODER-Gatter 5 für einen Low-Pegel wieder durchlässig gemacht werden

## Patentansprüche

1. Datenbus für mehrere Teilnehmer, die über einen Stemkoppler (K) miteinander verbunden sind, **dadurch gekennzeichnet, dass**
die Eingangssignale des Stemkopplers in elektrischer Form vorliegen, dass der Stemkoppler ein logisches Entscheidungsglied (1) enthält, an dessen Eingänge die Ausgänge der Teilnehmer angeschlossen sind und auf das die Eingangssignale geführt sind, dass der Ausgang des Entscheidungsglieds über eine im Stemkoppler angeordnete elektrische Leitung parallel an den Eingängen der Teilnehmer angeschlossen ist, dass zumindest ein Teil der Teilnehmer über eine optische Übertragungstrecke mit nach- bzw. vorgeschaltetem opto-elektrischen Wandlem (S/E-Modul n, S/E-Modul n+1) am Sternkoppler angeschlossen ist und dass die Eingänge der Teilnehmer über einen Logischen Schalter (5) im Sternkoppler an der elektrischen Leitung angeschlossen sind, der unabhängig vom Teilnehmer steuerbar ist.

2. Datenbus nach Anspruch 1, **dadurch gekennzeichnet, dass** der Schalter adressierbar ist.

## Claims

1. A data bus for a number of nodes connected via a star coupler (K), **characterised in that**
the input signals of the star coupler are in electrical form, the star coupler contains a logic decision element (1) whose inputs are connected to the node outputs and to which the input signals are supplied, the output of the decision element is connected in parallel to the inputs of the nodes via an electric line in the star coupler, at least some of the nodes are connected to the star coupler via an optical transmission section with downstream and/or upstream opto-electric transducers (S/E module n, S/E module n+1) and the inputs of the nodes are connected to the electric line in the star coupler via a logic switch (5) which is controllable independently of the node.

2. A data bus according to claim 1, **characterised in that** the switch is addressable.

## Revendications

1. Bus de données pour plusieurs noeuds reliés entre eux par un coupleur en étoile (K),
**caractérisé en ce que** :
- les signaux de sortie du coupleur en étoile sont sous forme électrique
- le coupleur en étoile comprend un organe de décision logique (1) aux entrées duquel sont raccordées les sorties des noeuds, les signaux d'entrée étant envoyés à ce coupleur
- la sortie de l'organe de décision est raccordée par un conducteur électrique monté dans le coupleur en étoile, en parallèle avec les entrées des noeuds
- au moins une partie des noeuds est raccordée par une transmission optique à des convertisseurs optoélectriques (S/E-Module n, S/E-Module n+1) raccordés en amont et en aval au coupleur en étoile
- les entrées des noeuds sont raccordées au conducteur électrique par un contacteur logique (5) monté sur le coupleur et qui peut être commandé indépendamment du noeud.

2. Bus de données selon la revendication 1,
**caractérisé en ce que**
le contacteur est adressable.
